# EUROPEAN PATENT APPLICATION

(11) **EP 4 851 806 A1**
(43) Date of publication of application: **09.12.2026**
(21) Application number: 26173946.0
(22) Date of filing: 22.04.2026
(51) Int. Cl.: G06F 11/07, G06F 9/46

(54) **A FUNCTION DISTRIBUTION SYSTEM FOR A VEHICLE**

(30) Priority: 04.06.2025 GB 202508754
(71) Applicant: AUMOVIO Germany GmbH, 60488 Frankfurt am Main (DE)
(72) Inventor: Hubli, Ashwini, 560099 Bangalore (IN)
(74) Representative: Aumovio Corporation

(57) **Abstract**

A function distribution system for a vehicle and a computer-implemented method of function distribution for a vehicle are provided, the function distribution system comprising a main processor unit; and two or more functionality control units coupled to the main processor unit for communication between the two or more functionality control units and the main processor unit, the two or more functionality control units each further coupled to a device disposed on the vehicle, wherein the two or more functionality control units are arranged to control a functionality of the device; wherein the main processor unit is arranged to determine whether one or more variant coding parameters associated with the device from the two or more functionality control units are a match; wherein the main processor unit is further arranged to determine whether one or more calibration parameters associated with the device from the two or more functionality control units are a match; and wherein the main processor unit is further arranged to generate an output comprising one or more alarms if there is at least one mismatch.

## Description

### TECHNICAL FIELD

The present disclosure broadly relates to a function distribution system for a vehicle and a computer-implemented method of function distribution for a vehicle.

### BACKGROUND

In the field of vehicular engineering, a component used in a vehicle, e.g. an automotive vehicle, such as a device or a sensor may have its functionalities controlled or implemented by more than one control unit e.g. an Electronic Control Unit (ECU). In other words, depending on the vehicle architecture, certain functionalities of a first ECU, e.g. for controlling a component, may be controlled or implemented by another second ECU e.g. for reasons such as shortage of pins in a parent or the first ECU or such as a component being physically closer to the vicinity of the second ECU as compared to the parent ECU. As one example, an activation of an audio-visual operation of a camera may be controlled by a first ECU (e.g. under an Advanced Driver Assistance System (ADAS) functionality) and a cleaning of a lens of the camera may be controlled/implemented by a second ECU (e.g. a Body Control Module (BCM)).

Furthermore, typically, it is the responsibility of an Original Equipment Manufacturer (OEM) to handle variant handling and calibration with respect to various components for vehicles. The inventor(s) has recognised that due to an increase in the number of functionalities and complexity of a vehicular system and changing vehicle architecture, the configuration for distributed functionalities among two or more (or a plurality) of ECUs may not be handled correctly during variant configuration and management.

Hence, in view of the above, there exists a need for a function distribution system for a vehicle and a computer-implemented method of function distribution for a vehicle that seek to address at least one of the above problems.

### SUMMARY

In accordance with an aspect of the present disclosure, there is provided a function distribution system for a vehicle, the function distribution system comprising, a main processor unit; and two or more functionality control units coupled to the main processor unit for communication between the two or more functionality control units and the main processor unit, the two or more functionality control units each further coupled to a device disposed on the vehicle, wherein the two or more functionality control units are arranged to control a functionality of the device; wherein the main processor unit is arranged to determine whether one or more variant coding parameters associated with the device from the two or more functionality control units are a match; wherein the main processor unit is further arranged to determine whether one or more calibration parameters associated with the device from the two or more functionality control units are a match; and wherein the main processor unit is further arranged to generate an output comprising one or more alarms if there is at least one mismatch.

Each of the two or more functionality control units may be arranged to retrieve the one or more variant coding parameters from a respective first storage area of each of the two or more functionality control units and to retrieve the one or more calibration parameters from a respective second storage area of each of the two or more functionality control units.

The main processor unit may be arranged to instruct each of the two or more functionality control units to perform at least one of a variant coding parameter data check and a calibration parameter data check.

One or both of the variant coding parameter data check and the calibration parameter data check may each comprise a performance of a 32-bit cyclic redundancy check (CRC32) calculation.

The one or more alarms may comprise a diagnostic trouble code (DTC).

A subset of the two or more functionality control units may be further arranged to process the one or more calibration parameters associated with the device from the subset of the two or more functionality control units with an adjustment factor, the process to enable a different calibration for the device for the subset of the two or more functionality control units.

One of the two or more functionality control units may function as the main processor unit.

In accordance with another aspect of the present disclosure, there is provided a computer-implemented method of function distribution for a vehicle, the computer-implemented method comprising, activating a main processor unit; coupling two or more functionality control units to the main processor unit for communication between the two or more functionality control units and the main processor unit; coupling the two or more functionality control units each to a device disposed on the vehicle, wherein the two or more functionality control units are arranged to control a functionality of the device; determining, by the main processor unit, whether one or more variant coding parameters associated with the device from the two or more functionality control units are a match; determining, by the main processor unit, whether one or more calibration parameters associated with the device from the two or more functionality control units are a match; and generating, by the main processor unit, an output comprising one or more alarms if there is at least one mismatch.

The computer-implemented method may further comprise retrieving, by each of the two or more functionality control units, the one or more variant coding parameters from a respective first storage area of each of the two or more functionality control units and retrieving, by the each of the two or more functionality control units, the one or more calibration parameters from a respective second storage area of each of the two or more functionality control units.

The computer-implemented method may further comprise instructing, by the main processor unit, each of the two or more functionality control units to perform at least one of a variant coding parameter data check and a calibration parameter data check.

The computer-implemented method may further comprise performing a 32-bit cyclic redundancy check (CRC32) calculation for one or both of the variant coding parameter data check and the calibration parameter data check.

The step of generating, by the main processor unit, an output comprising one or more alarms if there is at least one mismatch may further comprise generating, by the main processor unit, a diagnostic trouble code (DTC) as the output.

The computer-implemented method may further comprise processing, by a subset of the two or more functionality control units, the one or more calibration parameters associated with the device from the subset of the two or more functionality control units with an adjustment factor to enable a different calibration for the device for the subset of the two or more functionality control units.

The computer-implemented method may further comprise setting one of the two or more functionality control units to function as the main processor unit.

In accordance with another aspect of the present disclosure, there is provided a non-transitory computer readable storage medium having stored thereon software instructions that, when executed by a main processor unit of a function distribution system for a vehicle, cause the main processor unit to perform a computer-implemented method of function distribution for the vehicle as disclosed herein.

### BRIEF DESCRIPTION OF THE DRAWINGS

Exemplary embodiments of the present disclosure will be better understood and readily apparent to one of ordinary skill in the art from the following written description, by way of example only, and in conjunction with the drawings, in which:
FIG. 1 is a schematic drawing of a function distribution system for a vehicle in an exemplary embodiment.
FIG. 2 is a schematic drawing of a function distribution system of a vehicle in another exemplary embodiment.
FIG. 3 is a schematic drawing of a function distribution system of a vehicle for illustrating determination of a variant coding parameter in an exemplary embodiment.
FIG. 4 is a schematic drawing of a function distribution system of a vehicle for illustrating determination of a calibration parameter in an exemplary embodiment.
FIG. 5 is a schematic flowchart for illustrating a computer-implemented method of checking the plausibility of functional distribution across different zone control units (ZCUs) in a vehicle in an exemplary embodiment.
FIG. 6 is a schematic flowchart for illustrating a computer-implemented method of function distribution for a vehicle in an exemplary embodiment.

### DETAILED DESCRIPTION

Exemplary embodiments may provide a method to diagnose a plausibility of functional distribution (or distribution of a function) among two or more (or a plurality) of control units (e.g. Electronic Control Units (ECUs)). The ECUs may be of a vehicle, e.g. an automotive vehicle. The method may allow a check on the plausibility of functional distribution across different ECUs in a vehicle. Exemplary embodiments may provide a vehicle function distribution system that may implement a check for the above plausibility.

In the description herein, terms such as variant coding, variant handling, variant configuration, variant management may refer to different coding, handling, configuration, management related to a component variant (e.g. different models of a component such as an audio-visual camera) and/or to a vehicle variant (e.g. different models of a vehicle class etc.).

In the description herein, the terms "functionality" and "function" of a device may be used interchangeably.

In the description herein, the exemplary embodiments may be applicable to a vehicle. Such a vehicle may be an automotive vehicle and/or an electric vehicle. The exemplary embodiments are not limited to cars and may be applicable to any other forms of vehicle.

In some exemplary embodiments, at the vehicle level, it may be already determined/known (e.g. before the exemplary methods are implemented) which functionalities are distributed over different control units and which functionalities are standalone to a control unit (i.e. not distributed over different control units).

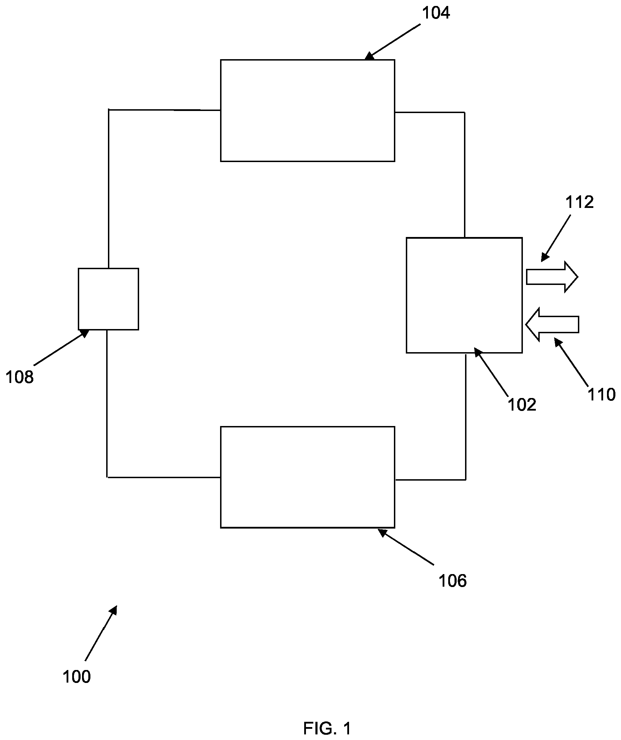

FIG. 1 is a schematic drawing of a function distribution system for a vehicle in an exemplary embodiment.

In the exemplary embodiment, the function distribution system 100 comprises a main processor unit 102 and two or more functionality control units 104, 106 each coupled to the main processor unit 102 for communication between the two or more functionality control units 104, 106 and the main processor unit 102. The two or more functionality control units 104, 106 are each further coupled to a (same) device 108 (e.g. a component) disposed on the vehicle, wherein the two or more functionality control units 104, 106 are arranged to control a functionality of the device 108. In the exemplary embodiment, the main processor unit 102 may be in the form of, or may comprise, a computer processor. In the exemplary embodiment, the device 108 may be a device such as, for example, a camera or may be another device such as, for example, a proximity sensor.

In the exemplary embodiment, the main processor unit 102 is arranged to determine whether one or more variant coding parameters associated with the device 108 from the two or more functionality control units 104, 106 are a match.

In the exemplary embodiment, the one or more variant coding parameters associated with the device 108 from the two or more functionality control units 104, 106 are to control a functionality of the device 108. A control or implementation of the functionality may be distributed across the two or more functionality control units 104, 106. As an example, the one or more variant coding parameters of the functionality may be stored at or stored in association with each of the two or more functionality control units 104, 106. Each of the two or more functionality control units 104, 106 is arranged to retrieve, and is capable of retrieving, the one or more variant coding parameters from the two or more functionality control units 104, 106, and the main processor unit 102 is arranged to perform, and is capable of performing, a determination of whether the one or more variant coding parameters from the two or more functionality control units 104, 106 are a match, e.g. or are consistent or is correctly coded etc.

In the exemplary embodiment, the main processor unit 102 is further arranged to determine whether one or more calibration parameters associated with the device 108 from the two or more functionality control units 104, 106 are a match.

In the exemplary embodiment, the one or more calibration parameters associated with the device 108 from the two or more functionality control units 104, 106 are to control a functionality of the device 108. Further, for example, the one or more calibration parameters associated with the device 108 may be for the calibration of the device 108 for a function of the device 108. If the device 108 is not properly calibrated with respect to the control of the two or more functionality control units 104, 106, the device 108 may not work or perform correctly. As an example, the one or more calibration parameters of a function associated with the device 108 may be stored at or stored in association with each of the two or more functionality control units 104, 106. Each of the two or more functionality control units 104, 106 is arranged to retrieve, and is capable of retrieving, the one or more calibration parameters from the two or more functionality control units 104, 106 and the main processor unit 102 is arranged to perform, and is capable of performing, a determination of whether the one or more calibration parameters from the two or more functionality control units 104, 106 are a match.

In the exemplary embodiment, the determination of whether one or more calibration parameters associated with the device 108 from the two or more functionality control units 104, 106 are a match is performed only after a determination that one or more variant coding parameters associated with the device 108 from the two or more functionality control units 104, 106 are a match. Therefore, there is a hierarchy of determinations performed by the main processor unit 102 in that a variant coding parameter data check determines that one or more variant coding parameters from the two or more functionality control units 104, 106 are plausible before a calibration parameter data check is performed on the plausibility of the one or more calibration parameters from the two or more functionality control units 104, 106.

In the exemplary embodiment, the main processor unit 102 may receive an input 110 in the form of a user activation or a user input command. For example, the main processor unit 102 may be activated with the input 110. In some exemplary embodiments, upon activation of the main processor unit 102, coupling of the two or more functionality control units 104, 106 to the main processor unit 102 for communication between the two or more functionality control units 104, 106 and the main processor unit 102 may occur. In some exemplary embodiments, upon activation of the main processor unit 102, coupling of the two or more functionality control units 104, 106 each to the device 108 disposed on the vehicle may occur, wherein the two or more functionality control units 104, 106 are arranged to control a functionality of the device 108. The user activation or the user input command may be to perform a check on the functional distribution of a function of the device 108, or may be to set off a sequence of checks of the function distribution system 100. In the exemplary embodiment, the input 110 may be provided to the main processor unit 102 via an input port (not shown) coupled to the main processor unit 102. Upon receipt of the input 110, the main processor unit 102 may proceed to perform the determination of whether the one or more variant coding parameters associated with the device 108 from the two or more functionality control units 104, 106 are a match and/or the determination of whether the one or more calibration parameters associated with the device 108 from the two or more functionality control units 104, 106 are a match.

In the exemplary embodiment, the main processor unit 102 is further arranged to generate an output 112 comprising one or more alarms if there is at least one mismatch. For example, one or more alarms may be output for a mismatch for the one or more variant coding parameters and/or for a mismatch for the one or more calibration parameters. In the event that there is no mismatch, the main processor unit 102 is further arranged to generate as the output 112 a signal informing that there is no mismatch. In the exemplary embodiment, the output 112 may be provided from the main processor unit 102 via an output port (not shown) coupled to the main processor unit 102.

In the exemplary embodiment, the one or more alarms may be in the form of generating a diagnostic trouble code (DTC). The one or more alarms may also be in the form of a signal to inhibit or to suspend certain functionalities e.g. of the vehicle. The one or more alarms may also be in the form of an activation of a limp mode or limp home mode in the vehicle. The one or more alarms may also be in the form of an activation of a warning lamp on a dashboard of the vehicle. Different forms of the one or more alarms may be activated based on a criticality of a mismatch determined by the main processor unit 102. The forms of alarms to be raised may be determined by a user e.g. from an Original Equipment Manufacturer (OEM).

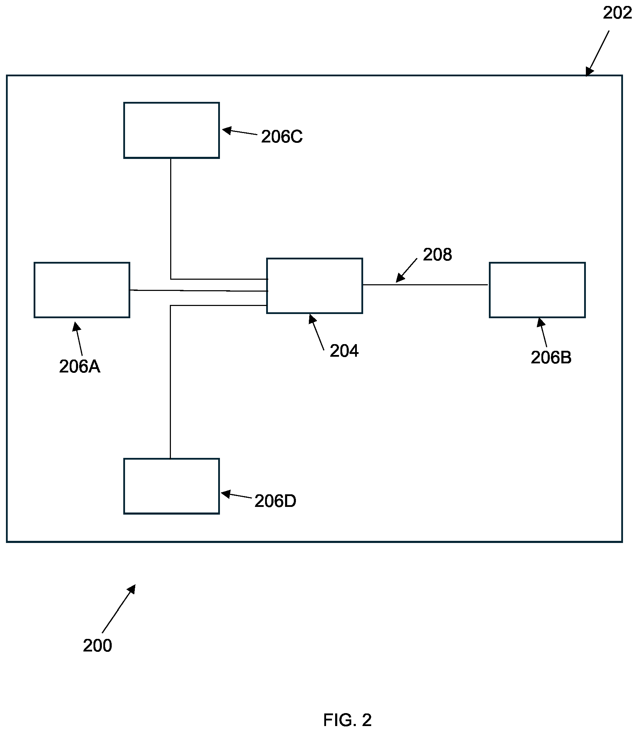

FIG. 2 is a schematic drawing of a function distribution system of a vehicle in an exemplary embodiment.

In the exemplary embodiment, the function distribution system 200 is disposed in a vehicle, e.g. an automotive vehicle 202 as illustrated in FIG. 2. The function distribution system 200 is substantially similar to the function distribution system 100 as described with reference to FIG. 1.

In the exemplary embodiment, the function distribution system 200 comprises a main processor unit in the form of a high performance computer (HPC) 204. Compare main processor unit 102 of FIG. 1. The system 200 further comprises two or more (or a plurality) of functionality control units, the functionality control units being in the form of zone control units (ZCUs) 206A, 206B, 206C and 206D. Compare functionality control units 104, 106 of FIG. 1. In the exemplary embodiment, the ZCU 206A is a front-side ZCU, the ZCU 206B is a rear-side ZCU, the ZCU 206C is a front-right-side ZCU and the ZCU 206D is a front-left-side ZCU. It will be appreciated that the designations of front-side, rear-side etc. may each refer to a location or vicinity with respect to the automotive vehicle 202. Each ZCU 206A, 206B, 206C and 206D is coupled to the HPC 204.

In the exemplary embodiment, the HPC 204 and the ZCUs 206A, 206B, 206C and 206D are coupled via a communication bus 208 for communications in the automotive vehicle 202. As such, the ZCUs 206A, 206B, 206C and 206D are networked to one another. Protocols such as, but not limited to, Ethernet and CAN FD (Controller Area Network Flexible Data-Rate) may be used for communications between the HPC 204 and the ZCUs 206A, 206B, 206C and 206D.

In the exemplary embodiment, the ZCU 206A is coupled to, and may control, the front exterior lights of the automotive vehicle 202 and the ZCU 206B is coupled to, and may control, the rear exterior lights of the automotive vehicle 202. The ZCU 206C is coupled to, and may control, the right side exterior lights and the right side interior lights of the automotive vehicle 202. The ZCU 206D is coupled to, and may control, the left side exterior lights and the left side interior lights of the automotive vehicle 202.

In the exemplary embodiment, the ZCU 206A and the ZCU 206B are each also coupled to a same device such as a Park Assist system of the automotive vehicle 202 (e.g. for controlling components such as sensors, cameras for the Park Assist system). The ZCU 206A may control functions of a Front Park Assist of the Park Assist system and the ZCU 206B may control functions of a Rear Park Assist of the Park Assist system. In the exemplary embodiment, the ZCU 206C and the ZCU 206D are each also coupled to another same device such as a Door Control system of the automotive vehicle 202 (e.g. for controlling components such as a universal/overall lock or unlock mechanism for the Door Control system). The ZCU 206C may control functions of a Right Side Door Control of the Door Control system and the ZCU 206D may control functions of a Left Side Door Control of the Door Control system.

For one example, in relation to a Park Assist functionality, based on vehicle variants or models, an Original Equipment Manufacturer (OEM) may provide, for a high-end vehicle (e.g. higher specification / more functionality / more expensive vehicle), both a front-side Park Assist and a rear-side Park Assist; while the OEM may provide, for a medium/low-end vehicle (e.g. lower specification / lesser functionality / less expensive vehicle), only a rear-side Park Assist. In the medium/low-end vehicle with only the rear-side Park Assist, the Park Assist functionality may be handled by one functionality control unit (for example, a Body Control Module (BCM)), while for the high-end vehicle, using e.g. a ZCU architecture, the Park Assist functionality can be distributed to a front-side functionality control unit and to a rear-side functionality control unit. In such a distribution, each distributed functionality (e.g. front-side Park Assist and/or rear-side Park Assist) may depend on an appropriate coordination and/or signal transfer between the two or more functionality control units implementing the distributed functionalities. As an example, Park Assist may depend on operation of the front-side Park Assist and the rear-side Park Assist. Therefore, the described exemplary embodiment may usefully determine plausibility of the functional distribution.

In another example, in relation to a Door Control functionality, it is recognised that a same software instruction package for Door Control may be used for a vehicle that is a 4-Door variant and a vehicle that is a 2-Door variant (e.g. a vehicle that may not contain rear occupants). It is recognised that a Door Control functionality is typically handled by one functionality control unit (for example, a Body Control Module (BCM)). Using e.g. a ZCU architecture, the Door Control functionality can be distributed to two or more different zones of a vehicle, e.g. distributed to a front-left-side functionality control unit and a front-right-side functionality control unit. Therefore, the described exemplary embodiment may usefully determine plausibility of the functional distribution. It is recognised that without such a functional distribution check, a functional control unit controlling e.g. a front/driver door may falsely / improperly detect missing rear door information in a 2-Door variant while utilising the software usable for a 4-Door variant.

In the exemplary embodiment, it is described that there are four ZCUs disposed in the system 200. It will be appreciated however that the system 200 may include any other number of ZCUs e.g. depending on the vehicle architecture.

In the exemplary embodiment, the HPC 204 is arranged to receive an input (not shown) in the form of a user activation or a user input command. The user activation or the user input command may be to perform a check on the functional distribution of a function of a device (e.g. the Park Assist system and/or the Door Control system), or may be to set off a sequence of checks of the function distribution system 200.

In the exemplary embodiment, the HPC 204 is arranged to determine whether one or more variant coding parameters associated with a device from two or more of ZCUs e.g. 206A, 206B, 206C and 206D are a match. The HPC 204 is further arranged to determine whether one or more calibration parameters associated with a device from the two or more ZCUs e.g. 206A, 206B, 206C and 206D are a match.

For example, for the Park Assist system, each of the two ZCUs 206A and 206B is arranged to retrieve one or more variant coding parameters of the Park Assist system from the two ZCUs 206A and 206B for a respective variant coding parameter data check and the HPC 204 is arranged to perform, and is capable of performing, a determination of whether the one or more variant coding parameters from the two ZCUs 206A and 206B are a match, e.g. or are consistent or is correctly coded etc.

For example, for the Park Assist system, each of the two ZCUs 206A and 206B is arranged to retrieve one or more calibration parameters from the two ZCUs 206A and 206B for a respective calibration parameter data check and the HPC 204 is arranged to perform, and is capable of performing, a determination of whether the one or more calibration parameters from the two ZCUs 206A and 206B are a match.

In one example, for an exterior light control functionality, control of exterior lighting of a vehicle may be distributed to different zones of the vehicle, e.g. distributed to two or more functionality control units. With regard to one or more calibration parameters, a front zone (e.g. implemented with a front-side functionality control unit coupled to a device such as a light emitting device) may be calibrated to provide a different signature light as compared to other zones of the vehicle. Therefore, the described exemplary embodiment implementing a calibration parameter data check may usefully identify plausibility errors in calibration, e.g. between different functionality control units or different zones of the vehicle.

In the exemplary embodiment, the HPC 204 is further arranged to generate as an output (not shown) one or more alarms if there is at least one mismatch. For example, one or more alarms may be output for a mismatch for the one or more variant coding parameters and/or for a mismatch for the one or more calibration parameters. In the event that there is no mismatch, the HPC 204 is further arranged to generate as the output a signal informing that there is no mismatch.

In some exemplary embodiments, the HPC 204 may be arranged to perform two steps in sequence. In a first step, the HPC 204 is arranged to determine/check if a distributed functionality of a device is plausible in terms of variant coding. If it determined that the functional distribution is plausible in terms of variant coding, in a second step, the HPC 204 is arranged to determine/check if a distributed functionality of a device is plausible based on calibration parameters.

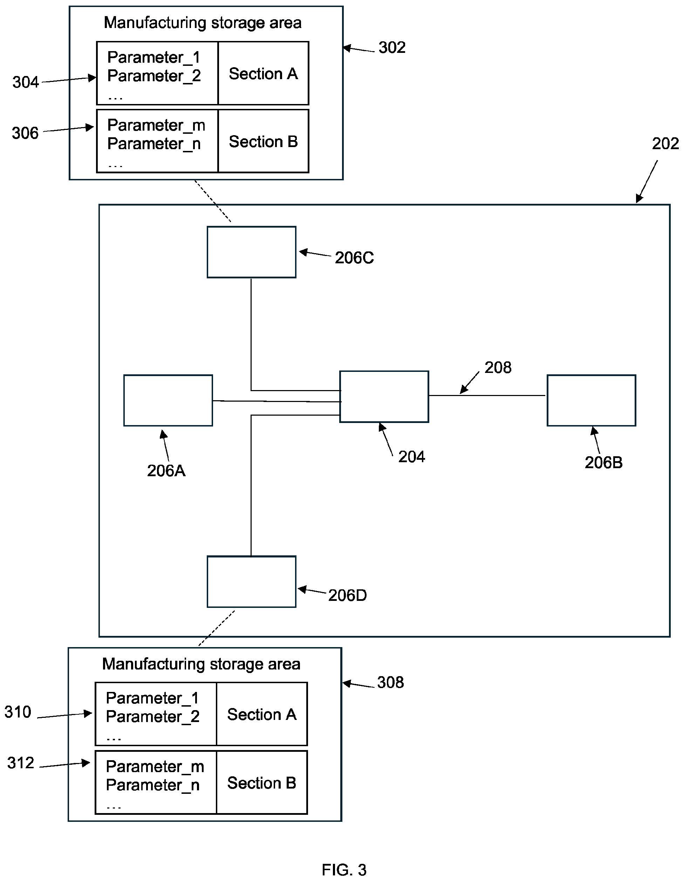

FIG. 3 is a schematic drawing of a function distribution system of a vehicle for illustrating determination of a variant coding parameter in an exemplary embodiment. The determination is for the plausibility of a function distribution based on the variant coding parameter. The system is substantially similar to the function distribution system 200 described with respect to FIG. 2. For ease of reference, like numerals are used for exemplary implementations of similar elements of the system 200 as described in FIG. 2.

In the exemplary embodiment, the HPC 204 is arranged to determine whether a functionality is correctly distributed between the ZCU 204C and the ZCU 204D. The functionality may be arbitrarily termed as Functionality 'X'.

In the exemplary embodiment, each ZCU (e.g. each of ZCU 206C and ZCU 206D) may comprise a manufacturing storage area or a One Time Programmable (OTP) storage/memory area (e.g. OTP ROM (One-Time Programmable Read-Only Memory) area) in which signature data unique corresponding to a hardware variant is written. The hardware variant may refer to, for example, a device disposed in the automotive vehicle 202, such as a sensor, an actuator and/or other relevant hardware. For example, the device may have different variants across different classes of vehicles. In the manufacturing storage area, each bit may represent whether or not a particular device (e.g. such as a sensor, an actuator and/or other relevant hardware) is installed in the automotive vehicle 202.

In the exemplary embodiment, if signature data shows that a device is installed, the manufacturing storage area may further store code for the functionality of the device.

In a manufacturing storage area 302 of the ZCU 206C, Functionality 'X' (or its code) may be divided and stored in two or more sections, e.g. a section A 304 and a section B 306. Thus, the manufacturing storage area 302 of the ZCU 206C may comprise two sections.

Section A 304 comprises, or has stored therein, one or more variant coding parameters (e.g. "Parameter_1", "Parameter_2") for the functionality that is distributed among ZCUs 206C and 206D and for situations where the functionality is dependent on data distributed to or provided to ZCU 206C. Section B 306 comprises, or has stored therein, one or more variant coding parameters for the functionality that is specific to ZCU 206C (e.g. "Parameter_m", "Parameter_n").

In the exemplary embodiment, a manufacturing storage area in ZCU 206D comprises two sections similar to the two sections of the manufacturing storage area of ZCU 206C as described above. Thus, similarly, in a manufacturing storage area 308 of the ZCU 206D, Functionality 'X' (or its code) may be divided and stored in two or more sections, e.g. a section A 310 and a section B 312. The nature/type of the one or more variant coding parameters stored in the section A 310 and the section B 312 of the manufacturing storage area 308 of the ZCU 206D are similar to the nature/type described respectively with reference to the section A 304 and the section B 306 of the manufacturing storage area 302 of the ZCU 206C.

In the exemplary embodiment, the HPC 204 is arranged to determine whether each ("a") variant coding parameter stored at the respective sections A 304, 310 of the manufacturing storage areas 302, 308 of ZCUs 206C and 206D are a match. Thus, in the exemplary embodiment, the determination is performed on a variant coding parameter of Functionality 'X' that is distributed across different ZCUs 206C, 206D, e.g. the functionality is dependent on data distributed to or provided to ZCU 206C and/or ZCU 206D.

In the exemplary embodiment, for the above determination by the HPC 204, the HPC 204 is arranged to transmit an instruction to the ZCU 206C and the ZCU 206D to cause the ZCU 206C and the ZCU 206D to each perform a data check (or variant coding parameter data check) over the respective sections A 304, 310.

In the exemplary embodiment, for the variant coding parameter data check, a 32-bit cyclic redundancy check (CRC32) calculation is performed. Thus, a CRC 32 calculation may be respectively performed over section A 304 of the ZCU 206C (e.g. represented by a function (VarCod_FR_Func_X)) and over section A 310 of the ZCU 206D (e.g. represented by a function (VarCod_FL_Func_X)). Thus, each of the two ZCUs 206C, 206D is arranged to retrieve the one or more variant coding parameters from a respective first storage area, e.g. the section A 304 and the section A 310, of each of the two ZCUs 206C, 206D, for the variant coding parameter data check.

The ZCUs 206C and 206D are arranged to transmit the results of their respective variant coding parameter data check to the HPC 204. The HPC 204 is arranged to receive the respective variant coding parameter data check results from the ZCUs 206C and 206D, and to use the results to determine whether the variant coding parameter respectively from the ZCUs 206C and 206D are a match.

The HPC 204 can thus perform a check on whether a functional distribution of a device among the ZCUs 206C and 206D is plausible, i.e. perform a plausibility check, based on variant coding.

In the exemplary embodiment, if the HPC 204 determines that there is a mismatch, e.g. based on an example "if" function syntax "IF (VarCod_FR_Func_X =! VarCod_FI_Func_X)", the HPC 204 is further arranged to generate as an output (not shown) one or more alarms. In the exemplary embodiment, as part of an alarm, the HPC 204 may generate a diagnostic trouble code (DTC) that indicates that there is a mismatch in the variant coding for the functionality that is distributed among the ZCUs 206C and 206D. In use, a tester or a user may be notified of the result of the variant coding plausibility check via the DTC. As one example, as another part of the alarm regarding variant coding, an error message "Mismatch in variant coding for Functionality X" may be generated and/or displayed at a tester display by the HPC 204.

In the exemplary embodiment, if it is determined by the HPC 204 that there is a match for the variant coding or the one or more variant coding parameters, it may be determined that the functional distribution among ZCUs 206C and 206D is plausible based on variant coding. The HPC 204 can be arranged to further determine whether a calibration parameter associated with a device from ZCUs 206C and 206D are a match.

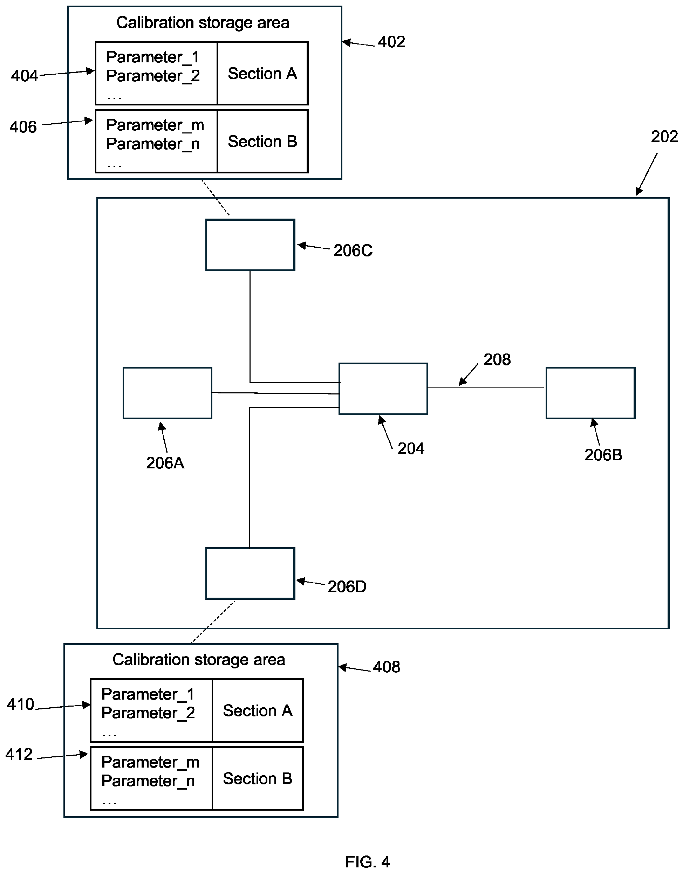

FIG. 4 is a schematic drawing of a function distribution system of a vehicle for illustrating determination of a calibration parameter in an exemplary embodiment. The determination is for the plausibility of a function distribution based on the calibration parameter. The system is substantially similar to the function distribution system 200 described with respect to FIG. 2. For ease of reference, like numerals are used for exemplary implementations of similar elements of the system 200 as described in FIG. 2.

In some exemplary embodiments, FIG. 4 may be seen as a continuation from FIG. 3. In such exemplary embodiments, after it is determined by the HPC 204 that functional distribution among ZCUs 206C and 206D is plausible based on variant coding (e.g. with respect to the description of FIG. 3), the HPC 204 is arranged to further determine whether the one or more calibration parameters associated with a device from ZCUs 206C and 206D are a match.

In the exemplary embodiment, each ZCU (e.g. each of ZCU 206C and ZCU 206D) may comprise a calibration storage/memory area for storing one or more calibration parameters. The calibration storage area may be provided in a non-volatile memory of each ZCU, e.g. in data flash or program flash.

In the exemplary embodiment, calibration parameters of Functionality 'X' may be divided and stored in two or more sections of a calibration storage area. In a calibration storage area 402 of the ZCU 206C, calibration parameters of Functionality 'X' may be divided and stored in two or more sections, e.g. a section A 404 and a section B 406. Thus, the calibration storage area 402 of the ZCU 206C may comprise two sections.

Section A 404 comprises, or has stored therein, one or more calibration parameters (e.g. see "Parameter_1", "Parameter_2") for the functionality that is distributed among ZCUs 206C and 206D and for situations where the functionality is dependent on data distributed to or provided to the ZCU 206C. Section B 406 comprises, or has stored therein, one or more calibration parameters for the functionality that is specific to the ZCU 206C (e.g. "Parameter_m", "Parameter_n").

In the exemplary embodiment, a calibration storage area in the ZCU 206D comprises two sections similar to the two sections of the calibration storage area of the ZCU 206C as described above. Thus, similarly, in a calibration storage area 408 of the ZCU 206D, calibration parameters of Functionality 'X' may be divided and stored in two or more sections, e.g. a section A 410 and a section B 412. The nature/type of the one or more calibration parameters stored in the section A 410 and the section B 412 of the calibration storage area 408 of the ZCU 206D are similar to the nature/type described respectively with reference to the section A 404 and the section B 406 of the calibration storage area 402 of the ZCU 206C.

In the exemplary embodiment, the HPC 204 is arranged to determine whether each ("a") calibration parameter stored at the respective sections A 404, 410 of the calibration storage areas 402, 408 of ZCUs 206C and 206D are a match. Thus, in the exemplary embodiment, the determination is performed on a calibration parameter of Functionality 'X' that is distributed across different ZCUs 206C, 206D, e.g. the functionality is dependent on data distributed to or provided to ZCU 206C and/or ZCU 206D.

In the exemplary embodiment, for the above determination by the HPC 204, the HPC 204 is arranged to transmit an instruction to the ZCU 206C and the ZCU 206D to cause the ZCU 206C and the ZCU 206D to each perform a data check (or calibration parameter data check) over the respective sections A 404, 410.

In the exemplary embodiment, for the calibration parameter data check, a 32-bit cyclic redundancy check (CRC32) calculation is performed. Thus, a CRC 32 calculation may be respectively performed over section A 404 of the ZCU 206C (e.g. represented by a function (Calib_FR_Func_X)) and over section A 410 of the ZCU 206D (e.g. represented by a function (Calib_FL_Func_X)). Thus, each of the two ZCUs 206C, 206D is arranged to retrieve the one or more calibration parameters from a respective second storage area, e.g. the section A 404 and the section A 410, of each of the two ZCUs 206C, 206D, for the calibration parameter data check.

The ZCUs 206C and 206D are arranged to transmit the results of their respective calibration parameter data check to the HPC 204. The HPC 204 is arranged to receive the respective calibration parameter data check results from the ZCUs 206C and 206D, and to use the results to determine whether the calibration parameter respectively from the ZCUs 206C and 206D are a match.

The HPC 204 can thus perform a check on whether a functional distribution of a device among ZCUs 204C and 204D is plausible, i.e. perform a plausibility check, based on calibration parameters.

In the exemplary embodiment, if the HPC 204 determines that there is a mismatch, e.g. based on an example "if" function syntax "IF (Calib_FR_Func_X != Calib_FL_Func_X)", the HPC 204 is further arranged to generate as an output (not shown) one or more alarms. In the exemplary embodiment, as part of an alarm, the HPC 204 may generate a diagnostic trouble code (DTC) that indicates that there is a mismatch in the calibration for the functionality that is distributed among the ZCUs 204C and 204D. In use, a tester or a user may be notified of the result of the calibration parameter plausibility check via the DTC. As one example, as another part of the alarm regarding calibration parameter, an error message "Mismatch in calibration for Functionality X" may be generated and/or displayed at a tester display by the HPC 204.

In the exemplary embodiment, if it is determined by the HPC 204 that there is a match for the one or more calibration parameters, it may be determined that the functional distribution of the device among ZCUs 204C and 204D is plausible based on calibration parameters.

In the exemplary embodiment, the respective sections A 404, 410 have been described to comprise or stored therein calibration parameters for a functionality that is distributed among the ZCUs 206C and 206D. In the exemplary embodiment, the calibration parameters of the sections A 404, 410 of the ZCUs 206C and 206D are to be determined to be identical e.g. to indicate that functional distribution among the ZCUs 206C and 206D is plausible.

In some exemplary embodiments, some calibration parameters of the sections A 404, 410 of the ZCUs 206C and 206D may have to be differently calibrated in a subset of the plurality of ZCUs, e.g. differently calibrated for the ZCU 206C as compared to the ZCU 206D, after a plausibility check. In such an exemplary embodiment, a section B each of the subset of the plurality of ZCUs is used.

As an example, with an assumption that one or more calibration parameters of the section A 404 of the ZCU 206C may have to be differently calibrated as compared to one or more calibration parameters of the section A 410 of the ZCU 206D, the section B 406 of the ZCU 206C is used. In such an exemplary embodiment, an adjustment factor may be provided for the calibration parameter that may have to be differently calibrated for the ZCU 206C. For example, an offset or an additional delay etc. as an adjustment factor may be desired and provided. The adjustment factor is stored and/or maintained in the section B 406 of the ZCU 206C. After the HPC 204 performs/completes the plausibility check for variant coding and the one or more calibration parameters, a software application may be adapted and executed at the ZCU 206C. For example, the relevant one or more calibration parameter of the section A 404 of the ZCU 206C to be differently calibrated may be read and adapted/adjusted using the adjustment factor. For example, the one or more calibration parameters may be read using appropriate logical operators. For example, bit masking, shifting left or right etc. may be used for the reading of the relevant one or more calibration parameters to be differently calibrated and also for applying the adjustment factor to the relevant one or more calibration parameters to be differently calibrated. Thus, in such an example, a subset of the ZCUs 206C, 206D (e.g. one of the ZCU 206C and the ZCU 206D) is further arranged to process the one or more calibration parameters associated with the device with an adjustment factor, the process to enable a different calibration for the device for the subset of the ZCUs 206C, 206D (e.g. one of the ZCU 206C and the ZCU 206D). As such, after the HPC 204 performs/completes the plausibility check for variant coding and the one or more calibration parameters, a subset of the ZCUs 206C, 206D (e.g. one of the ZCU 206C and the ZCU 206D) is further arranged to provide and use differently calibrated one or more calibration parameters.

Returning to FIG. 4, in the exemplary embodiment, it has been described that if there is at least one mismatch, the HPC 204 may generate a DTC as an output. In the exemplary embodiment, individual DTCs may be generated to indicate a mismatch in relation to each functionality that is distributed.

In the exemplary embodiment, if there is at least one mismatch, the HPC 204 may be arranged to generate as an/another output one or more alarms, other than generating a DTC. The one or more alarms may be in the form of a signal to inhibit or suspension of certain functionalities e.g. of the automotive vehicle 202. The one or more alarms may be in the form of an activation of a limp mode or limp home mode in the automotive vehicle 202, e.g. an instruction for minimal operations of the automotive vehicle 202 to enable the automotive vehicle 202 to reach its next destination. The one or more alarms may also be in the form of an activation of a warning lamp on a dashboard of the automotive vehicle 202. Different forms of the one or more alarms may be activated based on a criticality of the mismatch determined by HPC 204. The forms of alarms to be raised may be determined by a user e.g. from the Original Equipment Manufacturer (OEM).

Based on the description with reference to both FIGs. 3 and 4, in an exemplary embodiment, the main processor unit is arranged to instruct each of the two or more functionality control units to perform at least one of a variant coding parameter data check and a calibration parameter data check. One or both of the variant coding parameter data check and the calibration parameter data check each comprises a performance of a 32-bit cyclic redundancy check (CRC32) calculation.

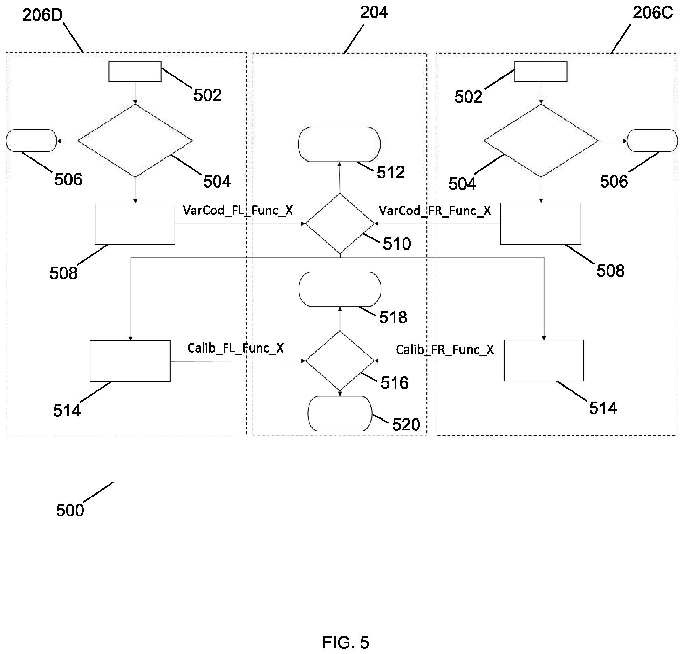

FIG. 5 is a schematic flowchart for illustrating a computer-implemented method of checking the plausibility of functional distribution across different zone control units (ZCUs) in a vehicle in an exemplary embodiment.

In the exemplary embodiment, the computer-implemented method may be implemented in a function distribution system substantially similar to the function distribution system 100 of FIG. 1 and the function distribution system 200 of FIG. 2. For ease of reference, like numerals are used for exemplary implementations of similar elements of the system 200 as described in FIG. 2. In the flowchart 500, the HPC 204, the ZCU 206C (as an exemplary electronic control unit) and the ZCU 206D (as another exemplary electronic control unit) are exemplarily used for illustration purposes.

At step 502 (twins), the ZCUs 206C and 206D are activated.

In the exemplary embodiment, in use, it is known, at the vehicle level, which functionalities are distributed over different ZCUs and which functionalities are standalone to a ZCU.

At step 504 (twins), it is determined, by the ZCUs 206C and 206D respectively, whether a functionality, e.g. Functionality 'X', is distributed across different ZCUs (e.g. ZCUs 206C and 206D). If it is determined that the functionality is not distributed across different ZCUs, i.e. the functionality is standalone to a ZCU, the method proceeds to step 506 (twins) and the method ends.

If it is determined at step 504 (twins) that the functionality is distributed across different ZCUs, the method proceeds to step 508 (twins).

At step 508 (twins), a variant coding parameter data check is performed. In the exemplary embodiment, for one or more variant coding parameters, a 32-bit cyclic redundancy check (CRC32) calculation is performed, by the ZCUs 206C and 206D respectively, for coding parameters for the functionality, e.g. Functionality 'X' distributed over a plurality of ZCUs. Compare, for example, to the description with reference to FIG. 3.

At step 510, it is determined, by the HPC 204, whether there is a match between the CRC32 calculated by the ZCU 206C and the ZCU 206D. For example, the determination may be e.g. based on an example "if" function syntax "IF (VarCod_FR_Func_X =! VarCod_FI_Func_X)".

If it is determined that there is a mismatch at step 510, at step 512, the HPC 204 may generate one or more alarms. In the exemplary embodiment, the HPC 204 generates a diagnostic trouble code (DTC) indicating a mismatch in the variant coding for the functionality. For example, a DTC error message "Mismatch in variant coding of Functionality X" may be generated and/or displayed at a tester display by the HPC 204. Otherwise, if it is determined at step 510 that there is a match, the method proceeds to step 514 (twins).

At step 514 (twins), a calibration parameter data check is performed. In the exemplary embodiment, for one or more calibration parameters, a CRC32 calculation is performed, by the ZCUs 206C and 206D respectively, for calibration parameters for the functionality, e.g. Functionality 'X' distributed over a plurality of ZCUs. Compare, for example, to the description with reference to FIG. 4.

At step 516, it is determined, by the HPC 204, whether there is a match between the CRC32 calculated by the ZCU 206C and ZCU 206D. For example, the determination may be e.g. based on an example "if" function syntax "IF (Calib_FR_Func_X != Calib_FL_Func_X)"

If it is determined that there is a mismatch at step 516, at step 518, the HPC 204 may generate one or more alarms. In the exemplary embodiment, the HPC 204 generates a diagnostic trouble code (DTC) indicating a mismatch in the one or more calibration parameters for the functionality. For example, a DTC error message "Mismatch in calibration of Functionality X" may be generated and/or displayed at a tester display by the HPC 204. Otherwise, if it is determined at step 516 that there is a match, the method proceeds to step 520.

At step 520, normal operations of other system(s) of the vehicle are implemented by the HPC 202.

In one exemplary embodiment, as one example, for a Park Assist functionality, for a variant coding parameter data check, "Parameter_1" may be a distinction between the installation state of an Optical Park System. For example, "Parameter_1" may indicate whether an Optical Park System is installed, whether an Optical Park System is not installed or whether a 360° Optical Park System is installed. An example of "Parameter_2" may be a distinction between a Park Assist functionality variant available in a vehicle. For example, "Parameter_2" may indicate whether no Park Assist is available for a vehicle, whether an Optical Park Assist with rear four sensors is available for the vehicle or whether an Optical Park Assist with front and rear with eight sensors is available for the vehicle. Please see, for example, Section A 304 and Section A 310 of FIG. 3.

In the exemplary embodiment, with respect to a same Park Assist functionality, as one example, for a calibration parameter data check, "Parameter_1" may be a Park Assist speed profile. For example, "Parameter_1" may indicate Park Assist speed profile 1, Park Assist speed profile 2 or Park Assist speed profile 3 (e.g. a predetermined Park Assist speed profile). An example of "Parameter_2" may be a Park Assist Scenario. For example, "Parameter_2" may indicate a Park Assist Scenario Perpendicular Parking (Backwards) or a Park Assist Scenario Perpendicular Parking (Forwards) etc. Please see, for example, Section A 404 and Section A 410 of FIG. 4.

In the exemplary embodiment, as one example, with respect to a Park Assist functionality (relating to an Intelligent Park Assist system), a function distribution system may be configured to perform the following checks. The checks may be performed at a production plant or at a car workshop, e.g. before a user (e.g. a consumer) uses a vehicle and activates the Intelligent Park Assist system.

In the example, the function distribution system may check to determine if functional distribution across both a front-side functionality control unit and a rear-side functionality control unit (or ZCUs) is plausible in terms of variant coding e.g. based on a variant coding parameter data check. For example, if the Park Assist functionality is distributed across the front-side and rear-side functionality control units, both the front-side and rear-side functionality control units may have stored therein respectively a variant coding parameter indicating that an Optical Park Assist with utilisation of front and rear eight sensors is available/installed. If a main processor unit of the function distribution system (e.g. a HPC) detects that the front-side and rear-side functionality control units are coded differently e.g. based on the variant coding parameter data check, i.e. that there is a mismatch, the main processor unit may, as one example, disable the Park Assist functionality in the vehicle (as an example of inhibiting or suspending certain functionalities of the vehicle).

If variant coding is found to match e.g. based on the variant coding parameter data check, the function distribution system may next check if functional distribution across both the front-side and rear-side functionality control units is plausible based on calibration parameters e.g. based on a calibration parameter data check. For example, if the Park Assist functionality is distributed across the front-side and rear-side functionality control units, both the front-side and rear-side functionality control units may have stored therein respectively the same calibration parameters, e.g. both front-side and rear-side functionality control units may have stored therein respectively calibration parameters for the same Park Assist Scenarios with the same Park Assist speed profiles. If the main processor unit detects a difference in the calibration parameters (e.g. the front-side functionality control unit has stored therein a calibration parameter for Perpendicular Parking (Backwards) and the rear-side functionality control unit has stored therein a calibration parameter for Perpendicular Parking (Forwards)), such a mismatch may lead to unintended or undesirable vehicle behaviour. Hence, in the exemplary embodiment, such a mismatch is to be detected before an Intelligent Park Assist system may be activated e.g. activated during a normal operation of the Intelligent Park Assist system by a user (e.g. a consumer) of a vehicle.

In one example, an adjustment factor may be provided to compensate for hardware specific tolerances or manufacturing tolerances. As one example, with respect to a Park Assist functionality, when the functionality is coded to support a front-side functionality control unit and a rear-side functionality control unit with eight sensors, based on sensor manufacturing tolerances (for sensors for the Park Assist functionality), an adjustment factor may be introduced for each of the sensors. As an example only, sensor 1 (a sensor) may be calibrated with a base value plus an adjustment factor 1 (an adjustment factor value) and sensor 2 (another sensor) may be calibrated with a base value minus an adjustment factor 2 (another adjustment factor value) etc. In this example, the base value may be written (or stored or maintained) in Section A of the calibration storage area (compare e.g. Sections A 404, 410 of FIG. 4) and the adjustment factors may be written (or stored or maintained) in Section B of the calibration storage area (compare e.g. Sections B 406, 412 of FIG. 4), for which Section B may be for storing data specific to a functionality control unit or a ZCU.

In another example, an adjustment factor may also be needed to compensate for a functionality in a specific zone of a vehicle. As one example, with respect to a Door Control functionality, a driver side zone (an area of the vehicle where a driver door is located) may require a higher / longer activation time or wait time etc. for the same distributed functionality (in this example, the Door Control functionality) compared to other zones of a vehicle. In this example, Section A of the calibration storage area of the functionality control units associated with the relevant device (for the Door Control functionality) may each have stored therein a same base time and Section B of the calibration storage area of (only) the functionality control unit for the driver side zone (e.g. a front-right-side functionality control unit) may have stored therein an adjustment factor to compensate for higher / longer time.

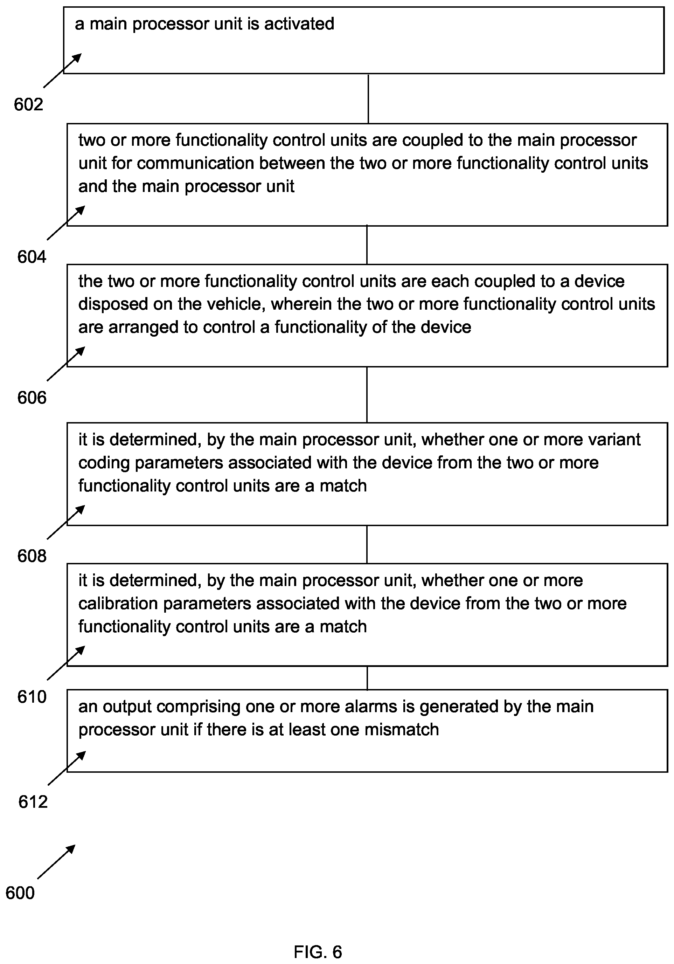

FIG. 6 is a schematic flowchart 600 for illustrating a computer-implemented method of function distribution for a vehicle in an exemplary embodiment.

At step 602, a main processor unit is activated. At step 604, two or more functionality control units are coupled to the main processor unit for communication between the two or more functionality control units and the main processor unit. At step 606, the two or more functionality control units are each coupled to a device disposed on the vehicle, wherein the two or more functionality control units are arranged to control a functionality of the device. At step 608, it is determined, by the main processor unit, whether one or more variant coding parameters associated with the device from the two or more functionality control units are a match. At step 610, it is determined, by the main processor unit, whether one or more calibration parameters associated with the device from the two or more functionality control units are a match. At step 612, an output comprising one or more alarms is generated by the main processor unit if there is at least one mismatch.

In the exemplary embodiment, the coupling may be, but is not limited to, electronic coupling that may occur when components are powered up.

In the exemplary embodiment, the computer-implemented method may further comprise retrieving, by each of the two or more functionality control units, the one or more variant coding parameters from a respective first storage area of each of the two or more functionality control units and retrieving, by the each of the two or more functionality control units, the one or more calibration parameters from a respective second storage area of each of the two or more functionality control units.

In the exemplary embodiment, the computer-implemented method may further comprise instructing, by the main processor unit, each of the two or more functionality control units to perform at least one of a variant coding parameter data check and a calibration parameter data check.

In the exemplary embodiment, the computer-implemented method may further comprise performing a 32-bit cyclic redundancy check (CRC32) calculation for one or both of the variant coding parameter data check and the calibration parameter data check.

In the exemplary embodiment, the step of generating, by the main processor unit, an output comprising one or more alarms if there is at least one mismatch may further comprise generating, by the main processor unit, a diagnostic trouble code (DTC) as the output.

In the exemplary embodiment, the computer-implemented method may further comprise processing, by a subset of the two or more functionality control units, the one or more calibration parameters associated with the device from the subset of the two or more functionality control units with an adjustment factor to enable a different calibration for the device for the subset of the two or more functionality control units.

In the exemplary embodiment, the computer-implemented method may further comprise setting one of the two or more functionality control units to function as the main processor unit.

In the description herein, it will be appreciated that the description also covers, in-use, the performing/performance of method or action steps connected to each of the various functions described with reference to each of the system components of the various exemplary embodiments.

In another exemplary embodiment, there is provided a non-transitory tangible computer readable storage medium having stored thereon software code or instructions that, when executed by a main processor unit of a function distribution system for a vehicle, cause the main processor unit to perform a method for function distribution for the vehicle as described above, e.g. the exemplary embodiments and/or the exemplary embodiment described with reference to FIG. 6.

In the described exemplary embodiments, coding and calibration of the control units (e.g. functionality control units, Electronic Control Units (ECUs) and Zone Control Units (ZCUs)) may be performed only at, for example, a production plant or at a car workshop. Further, the application software(s) and/or functionalities stored and implemented in the control units do not overwrite coding or calibration values.

In the described exemplary embodiments, the plausibility check may be performed once, e.g. when the operating system of a control unit is turned on. In the described exemplary embodiments, performing the plausibility check once (one time) may be sufficient and the results may remain valid until the operating system is turned off and is next turned on again. Hence, in the described exemplary embodiments, the vehicle system is usefully not loaded unnecessarily.

The described exemplary embodiments may check the plausibility of functional distribution by comparing the dependent variant coding and calibration parameters of at least two networked control units, e.g. functionality control units, ECUs or ZCUs of the described exemplary embodiments. The check may be performed once (one time) when the control units are started/activated (e.g. not periodically) as the variant coding or calibration do not change during runtime. Therefore, in the described exemplary embodiments, the vehicle system is not loaded by periodical checks unnecessarily.

The described exemplary embodiments can usefully avoid having to compare calculated values from two mechatronic systems periodically. The described exemplary embodiments instead check the plausibility of functional distribution by comparing the dependent one or more variant coding and one or more calibration parameters of at least two networked control units and the check is performed once (one time) e.g. when the control units are turned on. In the described exemplary embodiments, it may thus be possible to avoid having to perform the check periodically as the variant coding or calibration do not change during runtime.

In the described exemplary embodiments, the vehicle system may be usefully not loaded unnecessarily in that the function distribution system (instructed by the main processor unit) is not arranged to periodically compare the one or more variant coding parameters and the one or more calibration parameters of at least two networked control units. In the described exemplary embodiments, an error code (e.g. a diagnostic trouble code (DTC)) may be set/customised (i.e. customisable or can be set) to indicate which calibration parameter or coding parameter of a functionally distributed system has a mismatch. This may assist a tester/user e.g. from an Original Equipment Manufacturer (OEM) of a device and/or of a vehicle to check if the device, out of an entire vehicle system, has been configured or calibrated wrongly.

The described exemplary embodiments may enhance the overall diagnostics process for control units where functional distribution is desired/relevant. The described exemplary embodiments may be used in control units such as in the field of Advanced Driver Assistance Systems (ADAS), Body Control Modules (BCM) or Zone Control Units (ZCU) where functionalities such as, but limited to, exterior lights, interior lights, door control, Intelligent Park Assist, climate control etc. may be distributed to a plurality of different control units.

The described exemplary embodiments may detect the correctness of functional distribution in control units such as ZCUs. As one example, Intelligent Park Assist (IPA) could be supported at the front-side and rear-side of a vehicle in a high end variant of the vehicle whereas the same functionality (IPA) could be supported only in the rear-side for lower end variants of the vehicle. For IPA to work correctly in a high end variant of the vehicle, e.g. the control units in the front-side and rear-side of the vehicle are desired to be correctly coded and calibrated as per the requirements of the high end variant.

In one example situation, there may be a first control unit that controls valves which clean a vehicular camera (e.g. for the Advanced Driver-Assistance Systems (ADAS) functionality) that could be part of a network from another domain (e.g. Body functionality). This could be a strategic decision e.g. by an Original Equipment Manufacturer (OEM) to reduce the functionalities in one second control unit (i.e. another control unit separate from the first control unit) or the first control unit could also be in closer proximity physically to the Body control unit. In this scenario, it could be possible that the calibration for the functionality done in the first control unit may not match in certain aspects for the type of vehicular camera installed in a vehicle. Exemplary embodiments may assist in identifying such a mismatch.

The described exemplary embodiments usefully provide a means to detect if there are inconsistencies in the dependent variant coding and/or calibration for zonally distributed functions.

The described exemplary embodiments may usefully allow the vehicle and its vehicle system to be more technically reliable.

In the description herein, the terms "coupled" or "connected" as used are intended to cover both directly connected or connected through one or more intermediate means, unless otherwise stated.

The use of "a", "an" or "the" is intended to mean "one or more" unless it is described specifically to the contrary.

The terms "configured to (perform a task/action)", "configured for (performing a task/action)" and the like as used in this description include being programmable, programmed, connectable, wired or otherwise constructed to have the ability to perform the task/action when arranged or installed as described herein. The terms "configured to (perform a task/action)", "configured for (performing a task/action)" and the like are intended to cover "when in use, the task/action is performed", e.g. specifically to and/or specifically configured to and/or specifically arranged to and/or specifically adapted to do or perform a task/action.

The term "and/or", e.g., "X and/or Y" is understood to mean either "X and Y" or "X or Y" and should be taken to provide explicit support for both meanings or for either meaning. The use of "or" is intended to mean an "inclusive or," and not an "exclusive or" unless it is described specifically to the contrary.

The terms "associated with", "related to" and the like used herein when referring to two elements refers to a broad relationship between the two elements. The relationship includes, but is not limited to, a physical, a chemical or a biological relationship. For example, when element A is associated with element B, elements A and B may be directly or indirectly attached to each other or element A may contain element B or vice versa.

The terms "exemplary embodiment", "example embodiment", "exemplary implementation", "exemplarily" and the like used herein are intended to indicate an example of matters described in the present disclosure. Such an example may relate to one or more features defined in the claims and is not necessarily intended to emphasise a best example or any essentialness of any features.

The description herein may be, in certain portions, explicitly or implicitly described as algorithms and/or functional operations that operate on data within a computer memory or an electronic circuit. These algorithmic descriptions and/or functional operations are usually used by those skilled in the information/data processing arts for efficient description. An algorithm is generally relating to a self-consistent sequence of steps leading to a desired result. The algorithmic steps can include physical manipulations of physical quantities, such as electrical, magnetic or optical signals capable of being stored, transmitted, transferred, combined, compared, and otherwise manipulated.

Further, unless specifically stated otherwise, and would ordinarily be apparent from the following, a person skilled in the art will appreciate that throughout the present specification, discussions utilizing terms such as "scanning", "calculating", "determining", "replacing", "generating", "initializing", "outputting", and the like, refer to action and processes of an instructing processor/computer system, or similar electronic circuit/device/component, that manipulates/processes and transforms data represented as physical quantities within the described system into other data similarly represented as physical quantities within the system or other information storage, transmission or display devices etc.

The description also discloses relevant device/apparatus for performing the steps of the described methods. Such apparatus may be specifically constructed for the purposes of the methods, or may comprise a general purpose computer/processor or other device selectively activated or reconfigured by a computer program stored in a storage member. The algorithms and displays described herein are not inherently related to any particular computer or other apparatus. It is understood that general purpose devices/machines may be used in accordance with the teachings herein. Alternatively, the construction of a specialized device/apparatus to perform the method steps may be desired.

In addition, it is submitted that the description also implicitly covers a computer program, in that it would be clear that the steps of the methods described herein may be put into effect by computer code. It will be appreciated that a large variety of programming languages and coding can be used to implement the teachings of the description herein. Moreover, the computer program if applicable is not limited to any particular control flow and can use different control flows without departing from the scope of the invention.

Furthermore, one or more of the steps of the computer program if applicable may be performed in parallel and/or sequentially. Such a computer program if applicable may be stored on any computer readable medium. The computer readable medium may include storage devices such as magnetic or optical disks, memory chips, or other storage devices suitable for interfacing with a suitable reader/general purpose computer. In such instances, the computer readable storage medium is non-transitory. Such storage medium also covers all computer-readable media e.g. medium that stores data only for short periods of time and/or only in the presence of power, such as register memory, processor cache and Random Access Memory (RAM) and the like. The computer readable medium may even include a wired medium such as exemplified in the Internet system, or wireless medium such as exemplified in Bluetooth technology. The computer readable medium may be, for example, cloud storage in the Internet or within an intranet. The computer program when loaded and executed on a suitable reader effectively results in an apparatus that can implement the steps of the described methods, e.g. in a physical embodiment. The computer readable medium is intended to be transferable and is reproducible in that the computer program if applicable is reproducible..

The exemplary embodiments may also be implemented as hardware modules. A module is a functional hardware unit designed for use with other components or modules. For example, a module may be implemented using digital or discrete electronic components, or it can form a portion of an entire electronic circuit such as an Application Specific Integrated Circuit (ASIC). A person skilled in the art will understand that the exemplary embodiments can also be implemented as a combination of hardware and software modules.

Additionally, when describing some embodiments, the disclosure may have disclosed a method and/or process as a particular sequence of steps. However, unless otherwise required, it will be appreciated the method or process should not be limited to the particular sequence of steps disclosed. Other sequences of steps may be possible. The particular order of the steps disclosed herein should not be construed as undue limitations. Unless otherwise required, a method and/or process disclosed herein should not be limited to the steps being carried out in the order written. The sequence of steps may be varied and still remain within the scope of the disclosure.

Further, in the description herein, the word "substantially" whenever used is understood to include, but not restricted to, "entirely" or "completely" and the like. In addition, terms such as "comprising", "comprise", and the like whenever used, are intended to be non-restricting descriptive language in that they broadly include elements/components recited after such terms, in addition to other components not explicitly recited. For an example, when "comprising" is used, reference to a "one" feature is also intended to be a reference to "at least one" of that feature. Terms such as "consisting", "consist", and the like, may, in the appropriate context, be considered as a subset of terms such as "comprising", "comprise", and the like. Therefore, in embodiments disclosed herein using the terms such as "comprising", "comprise", and the like, it will be appreciated that these embodiments provide teaching for corresponding embodiments using terms such as "consisting", "consist", and the like. Further, terms such as "about", "approximately" and the like whenever used, typically means a reasonable variation, for example a variation of +/- 5% of the disclosed value, or a variance of 4% of the disclosed value, or a variance of 3% of the disclosed value, a variance of 2% of the disclosed value or a variance of 1% of the disclosed value.

Furthermore, in the description herein, certain values may be disclosed in a range. The values showing the end points of a range are intended to illustrate a preferred range. Whenever a range has been described, it is intended that the range covers and teaches all possible sub-ranges as well as individual numerical values within that range. That is, the end points of a range should not be interpreted as inflexible limitations. For example, a description of a range of 1% to 5% is intended to have specifically disclosed sub-ranges 1% to 2%, 1% to 3%, 1% to 4%, 2% to 3% etc., as well as individually, values within that range such as 1%, 2%, 3%, 4% and 5%. It is to be appreciated that the individual numerical values within the range also include integers, fractions and decimals. Furthermore, whenever a range has been described, it is also intended that the range covers and teaches values of up to 2 additional decimal places or significant figures (where appropriate) from the shown numerical end points. For example, a description of a range of 1% to 5% is intended to have specifically disclosed the ranges 1.00% to 5.00% and also 1.0% to 5.0% and all their intermediate values (such as 1.01%, 1.02% ... 4.98%, 4.99%, 5.00% and 1.1%, 1.2% ... 4.8%, 4.9%, 5.0% etc.,) spanning the ranges. The intention of the above specific disclosure is applicable to any depth/breadth of a range.

In the described exemplary embodiments, the main processor unit may control various devices or components of the vehicle and may also implement the functions of the exemplary embodiments, e.g. taking place in or about the vehicle. In the described exemplary embodiments, one or more steps of the exemplary embodiments may be instructed by software code/instructions stored and accessible by the main processor unit of the vehicle. As an example, a software application may be installed with the main processor unit to implement one or more steps of the exemplary embodiments.

In the described exemplary embodiments, the two or more functionality control units may each comprise a processing member. The processing member may control various devices (e.g. components) of the vehicle and may also implement the functions of the exemplary embodiments, e.g. taking place in or about the two or more functionality control units.

In the described exemplary embodiments, it has been described that the exemplary systems comprise a main processor unit (or e.g. in the form of a High Performance Computer (HPC)). However, it will be appreciated that such function distribution systems are not limited as such. For example, a function distribution system may not be provided with a main processor unit or a HPC. In such exemplary embodiments, one of the functionality control units (or e.g. in the form of one of two or more Zone Control Units (ZCUs)) may be arranged/set to perform the functions of the main processor unit described herein and/or to function as the main processor unit, e.g. one of the functionality control units (e.g. one of the ZCUs) may be a "master" unit to check the plausibility of functional distribution of a device (based on variant coding and/or calibration parameter) among itself and the other networked functionality control units (e.g. the other ZCUs).

In the described exemplary embodiments, it has been described that a 32-bit cyclic redundancy check (CRC32) calculation is performed for a variant coding parameter data check and/or a calibration parameter data check. In some exemplary embodiments, the variant coding data and/or a calibration parameter data may be provided in binary code format. Compare e.g. Parameter_1, Parameter_2 of FIGs. 3 and 4. CRC32 is an error detecting code that is used to detect accidental changes to digital data and will be appreciated to be implementable as a data check with such code formats. Further, it will be appreciated that the described exemplary embodiments are not limited to CRC32 for data checks and other forms of data checks may be implemented using, for example but not limited to checksums, hash functions or parity checks.

In some exemplary embodiments, it is described that a subset of two or more functionality control units may be further arranged to process one or more calibration parameters associated with a device from the subset of the two or more functionality control units with an adjustment factor, with the process/processing to enable a different calibration for the device for the subset of the two or more functionality control units. It will be appreciated that the description of the subset may encompass different calibration among the full set of the two or more functionality control units in that the subset is differently calibrated from the rest of the functionality control units, but does not exclude that the rest of the functionality control units may also process calibration parameters differently.

It will be appreciated by a person skilled in the art that other variations and/or modifications may be made to the specific embodiments without departing from the scope of the claimed invention as broadly described. For example, in the description herein, features of different exemplary embodiments may be mixed, combined, interchanged, incorporated, adopted, modified, included etc. or the like across different exemplary embodiments. For example, exemplary embodiments are not necessarily mutually exclusive as some may be combined with one or more embodiments to form new exemplary embodiments. Furthermore, it will be appreciated that while the present disclosure provides embodiments having one or more of the features/characteristics discussed herein, one or more of these features/characteristics may also be disclaimed in other alternative embodiments and the present disclosure provides support for such disclaimers and these associated alternative embodiments. The present embodiments are, therefore, to be considered in all respects to be illustrative and not restrictive.

### REFERENCE SIGNS LIST

100 function distribution system
102 main processor unit
104 first functionality control unit
106 second functionality control unit
108 device
110 input of main processor unit
112 output of main processor unit
200 function distribution system
202 automotive vehicle
204 high performance computer (HPC)
206A front-side zone control unit (ZCU)
206B rear-side ZCU
206C front-right-side ZCU
206D front-left-side ZCU
208 communication bus
302 manufacturing storage area of ZCU 206C
304 section A of manufacturing storage area 302
306 section B of manufacturing storage area 302
308 manufacturing storage area of ZCU 206D
310 section A of manufacturing storage area 308
312 section B of manufacturing storage area 308
402 calibration storage area of ZCU 206C
404 section A of calibration storage area 402
406 section B of calibration storage area 402
408 calibration storage area of ZCU 206D
410 section A of calibration storage area 408
412 section B of calibration storage area 408
500 flowchart for illustrating a computer-implemented method of checking the plausibility of functional distribution across different zone control units (ZCUs) in a vehicle
502 step of activating ZCUs 206C and 206D
504 step of determining whether a functionality is distributed across ZCUs 206C and 206D.
506 step of exiting the method
508 step of performance of a variant coding parameter data check
510 step of determining whether there is a match between the CRC32 calculated by the ZCU 206C and the ZCU 206D for the variant coding parameter data check
512 step of generation of one or more alarms
514 step of performance of a calibration parameter data check
516 step of determining whether there is a match between the CRC32 calculated by ZCU 206C and ZCU 206D for the calibration parameter data check
518 step of generation of one or more alarms
520 step of implementing normal operations of other system(s) of a vehicle
600 flowchart for illustrating a computer-implemented method of function distribution for a vehicle
602 step including activating a main processor unit
604 step including coupling two or more functionality control units to the main processor unit
606 step including coupling the two or more functionality control units each to a device disposed on the vehicle
608 step including determining, by the main processor unit, whether one or more variant coding parameters associated with the device from the two or more functionality control units are a match
610 step including determining, by the main processor unit, whether one or more calibration parameters associated with the device from the two or more functionality control units are a match
612 step including generating, by the main processor unit, an output comprising one or more alarms if there is at least one mismatch

## Claims

1. A function distribution system (100) for a vehicle, the function distribution system comprising,
a main processor unit (102); and
two or more functionality control units (104, 106) coupled to the main processor unit for communication between the two or more functionality control units and the main processor unit, the two or more functionality control units each further coupled to a device (108) disposed on the vehicle, wherein the two or more functionality control units are arranged to control a functionality of the device (108);
**characterised in that** the main processor unit (108) is arranged to determine whether one or more variant coding parameters associated with the device (108) from the two or more functionality control units are a match;
wherein the main processor unit (102) is further arranged to determine whether one or more calibration parameters associated with the device (108) from the two or more functionality control units are a match; and
wherein the main processor unit (102) is further arranged to generate an output (112) comprising one or more alarms if there is at least one mismatch.

2. The function distribution system as claimed in claim 1, wherein each of the two or more functionality control units is arranged to retrieve the one or more variant coding parameters from a respective first storage area (302, 308) of each of the two or more functionality control units and to retrieve the one or more calibration parameters from a respective second storage area (402, 408) of each of the two or more functionality control units.

3. The function distribution system as claimed in claims 1 or 2, wherein the main processor unit is arranged to instruct each of the two or more functionality control units to perform at least one of a variant coding parameter data check (508) and a calibration parameter data check (514).

4. The function distribution system as claimed in claim 3, wherein one or both of the variant coding parameter data check and the calibration parameter data check each comprises a performance of a 32-bit cyclic redundancy check (CRC32) calculation.

5. The function distribution system as claimed in any one of claims 1 to 4, wherein the one or more alarms comprises a diagnostic trouble code (DTC).

6. The function distribution system as claimed in any one of claims 1 to 5, wherein a subset of the two or more functionality control units is further arranged to process the one or more calibration parameters associated with the device from the subset of the two or more functionality control units with an adjustment factor, the process to enable a different calibration for the device for the subset of the two or more functionality control units.

7. The function distribution system as claimed in any one of claims 1 to 6, wherein one of the two or more functionality control units (104, 106) functions as the main processor unit (102).

8. A computer-implemented method of function distribution for a vehicle, the computer-implemented method comprising,
activating a main processor unit (602);
coupling two or more functionality control units to the main processor unit for communication between the two or more functionality control units and the main processor unit (604);
coupling the two or more functionality control units each to a device disposed on the vehicle, wherein the two or more functionality control units are arranged to control a functionality of the device (606);
**characterised in that** the computer-implemented method further comprises,
determining, by the main processor unit, whether one or more variant coding parameters associated with the device from the two or more functionality control units are a match (608);
determining, by the main processor unit, whether one or more calibration parameters associated with the device from the two or more functionality control units are a match (610); and
generating, by the main processor unit, an output comprising one or more alarms if there is at least one mismatch (612).

9. The computer-implemented method as claimed in claim 8, further comprising
retrieving, by each of the two or more functionality control units, the one or more variant coding parameters from a respective first storage area of each of the two or more functionality control units and
retrieving, by the each of the two or more functionality control units, the one or more calibration parameters from a respective second storage area of each of the two or more functionality control units.

10. The computer-implemented method as claimed in claims 8 or 9, further comprising instructing, by the main processor unit, each of the two or more functionality control units to perform at least one of a variant coding parameter data check and a calibration parameter data check.

11. The computer-implemented method as claimed in claim 10, further comprising performing a 32-bit cyclic redundancy check (CRC32) calculation for one or both of the variant coding parameter data check and the calibration parameter data check.

12. The computer-implemented method as claimed in any one of claims 8 to 11, wherein the step of generating, by the main processor unit, an output comprising one or more alarms if there is at least one mismatch further comprises generating, by the main processor unit, a diagnostic trouble code (DTC) as the output.

13. The computer-implemented method as claimed in any one of claims 8 to 12, further comprising processing, by a subset of the two or more functionality control units, the one or more calibration parameters associated with the device from the subset of the two or more functionality control units with an adjustment factor to enable a different calibration for the device for the subset of the two or more functionality control units.

14. The computer-implemented method as claimed in any one of claims 8 to 13, further comprising setting one of the two or more functionality control units to function as the main processor unit.

15. A non-transitory computer readable storage medium having stored thereon software instructions that, when executed by a main processor unit of a function distribution system for a vehicle, cause the main processor unit to perform a computer-implemented method of function distribution for the vehicle as claimed in any one of claims 8 to 14.
